# EUROPÄISCHE PATENTSCHRIFT

(11) **EP 4 345 324 B1**
(45) Veröffentlichungstag und Bekanntmachung des Hinweises auf die Patenterteilung: **08.04.2026**
(21) Anmeldenummer: 23201252.6
(22) Anmeldetag: 02.10.2023
(51) Int. Cl.: F16B 45/02, F16B 45/00

(54) **KARABINERVORRICHTUNG UND ÖFFUNGSVORRICHTUNG FÜR KARABINER**
CARABINER DEVICE AND CARABINER OPENING DEVICE
MOUSQUETON ET DISPOSITIF D'OUVERTURE POUR MOUSQUETON

(30) Priorität: 30.09.2022 DE 202022002153 U
(43) Veröffentlichungstag der Anmeldung: 03.04.2024
(73) Patentinhaber: Boards & More GmbH, 4591 Molln (AT)
(72) Erfinder: BITTEROLF, Ulrich, 87436 Kempten (DE); MATHES, Aron, 82041 Oberhaching (DE)
(74) Vertreter: MERH-IP Matias Erny Reichl Hoffmann Patentanwälte PartG mbB

(56) Entgegenhaltungen:
- DE-A1- 102005 013 031
- DE-T5- 112020 005 469
- IT-A1- 202000 019 402
- US-A1- 2020 261 772
- DUOTONE KITEBOARDING: "Duotone Trust Bar 2019 Product Clip", 6 August 2018 (2018-08-06), XP093130374, Retrieved from the Internet <URL:https://www.youtube.com/watch?v=YnJw8Jv4x0o> [retrieved on 20240212]

## Beschreibung

Die Erfindung betrifft eine Karabinervorrichtung und eine Öffnungseinrichtung für Karabiner vorzugsweise mit Sicherungsfunktion, insbesondere zur Anwendung beim Wassersport, Bergsport und anderen Anwendungen, bei denen eine Sicherung vor ungewolltem Öffnen des Karabiners aus Sicherheitsgründen sehr wichtig ist.

Karabiner mit Sicherungsfunktion vor ungewolltem Öffnen sind grundsätzlich beispielsweise aus dem Kitesport bekannt. Sie können u.a. der Befestigung einer Sicherungsleine dienen, mittels derer der Kiteschirm an einem Trapez des Surfers befestigt wird. Diese Sicherungsleine kann im Gefahrenfall durch einen Auslösemechanismus gelöst werden, so dass sich der Surfer vollständig von dem Fluggerät trennen kann.

In der Praxis muss diese Sicherungsleine vor dem Surfen mit dem Trapez des Surfers verbunden werden. Dies erfolgt durch Betätigung des Karabiners per Hand durch den Surfer. Zur Verhinderung eines unbeabsichtigten Öffnens des Karabiners beim Surfen oder beim Starten des Kiteschirms weisen vorbekannte Karabiner ein deformierbares Abdeckelement auf, das im geschlossenen Zustand des Karabiners den Schlossriegel des Karabiners mindestens teilweise überdeckt. Auf diese Weise soll verhindert werden, dass sich der Karabiner unbeabsichtigt öffnet, wenn beispielsweise Leinen zur Anlage auf dem Schlossriegel gelangen und dadurch das Risiko entsteht, dass sich der Karabiner unbeabsichtigt öffnet. Beim Einhängen der Öse der Sicherheitsleine in den Karabiner wird im Stand der Technik zunächst das Abdeckelement nach unten geschoben, so dass der Schlossriegel des Karabiners freigegeben wird und dieser dann vom Surfer per Hand nach hinten gedrückt wird, so dass der Karabiner sich öffnet und die Öse eingehängt werden kann.

Da es sich allein aus Gewichtsgründen in der Praxis um zumeist recht kleine Karabinerelemente handelt, die hier Verwendung finden, ist es umständlich für den Surfer, beim Einhängen der Sicherungsleine in den Karabiner zunächst das Abdeckelement beiseite zu schieben und dann gleichzeitig den Schlossriegel zurückzudrücken. Häufiger ergibt es sich dabei, dass das Abdeckelement nicht weit genug zusammengedrückt werden kann in einfacher Weise, so dass ausreichend Platz für die Öffnung des Karabiners entsteht, so dass die entsprechende Öse der Sicherheitsleine eingehängt werden kann, und die Finger der Hand im Wege sind.

Eine Karabinervorrichtung ist aus der IT 2020 0001 9402 A1 bekannt. Eine Öffnungsvorrichtung für einen Karabiner ist aus der US 2020/261772 A1 bekannt.

Vor diesem Hintergrund ist es eine Aufgabe der Erfindung, eine Karabinervorrichtung und eine Öffnungsvorrichtung für Karabiner mit Sicherungsfunktion bereitzustellen, die in einfacher und zuverlässiger Weise durch den Nutzer betätigt werden können.

Die Aufgabe wird durch eine Karabinervorrichtung mit den Merkmalen des Anspruchs 1 und eine Öffnungseinrichtung mit den Merkmalen des Anspruchs 13 gelöst. Die Unteransprüche geben besonders vorteilhafte Ausgestaltungen der Erfindung an.

Die erfindungsgemäße Karabinervorrichtung weist ein Karabinerelement mit Karabinerbügel und ein Schloss mit gegenüber dem Karabinerbügel beweglichem Schlossriegel auf, durch dessen Betätigung der Karabiner geöffnet wird.

Erfindungsgemäß ist eine Betätigungseinrichtung vorgesehen, die mit dem Schlossriegel in Wirkverbindung steht und bei Betätigung eine Kraft zur Öffnung des Karabiners auf den Schlossriegel überträgt.

Mit anderen Worten wird bei der erfindungsgemäßen Karabinervorrichtung die Funktion Verriegelung des Schlosses mittels Schlossriegel und die Betätigung des Schlosses zur Öffnung desselben getrennt, indem diese durch eine Betätigungseinrichtung vorgenommen wird, die mit dem Schlossriegel in Wirkverbindung steht. Auf diese Weise wird gewährleistet, dass die Finger des Nutzers, der den Karabiner betätigt, nicht mehr im Wege sind, wenn die Öse eingehängt wird. Es muss lediglich die Betätigungseinrichtung betätigt werden statt, wie bisher im Stand der Technik, den Schlossriegel händisch mit den Fingern zunächst zurückzudrücken und dabei ggf. gleichzeitig eine Sicherungseinrichtung zu deaktivieren, z.B. ein Abdeckelement, das den Schlossriegel überdeckt, zur Öffnung des Karabinerelements aus dem Weg schieben.

Ein Karabinerelement mit Schloss und Schlossriegel im Sinne der vorliegenden Erfindung kann in einfacher Ausführung ein Haken mit federunterstütztem Schnappverschluss sein.

Die erfindungsgemäße Karabinervorrichtung weist eine Sicherungseinrichtung auf, die dazu eingerichtet ist, eine unbeabsichtigte Öffnung des Karabinerelements durch Betätigung des Schlossriegels zu verhindern, wobei die Sicherungseinrichtung ein Betätigungselement der Betätigungseinrichtung umfasst.

Die Sicherungseinrichtung kann ein vorzugsweise elastisch deformierbares Grundelement, vorzugsweise in Form einer Hülse oder einer mindestens teilweisen Ummantelung des Karabinerelementes, und/oder (nur) ein Betätigungsteil der Betätigungseinrichtung umfassen.

Bei einer besonders zweckmäßigen Ausführungsform der Erfindung weist die Karabinervorrichtung als Sicherungseinrichtung ein Abdeckelement auf, das im geschlossenen Zustand des Karabiners den Schlossriegel mindestens teilweise überdeckt und das Bestätigungselement, vorzugsweise in Form eines Tastenelements, umfasst. Dabei kann das Abdeckelement derart ausgebildet sein, dass bei Betätigung des Bestätigungselements die Überdeckung des Schlossriegels so weit verringert wird, dass eine Öse eines Einhängeelementes, beispielsweise einer Sicherungsleine, in den Karabiner eingehängt werden kann.

Ferner kann das Abdeckelement derart ausgebildet sein, dass es nach Loslassen des Bestätigungselements selbstständig in seine Ausgangsstellung zurückkehrt, in der der Schlossriegel mindestens teilweise überdeckt ist. Die Sicherungsfunktion dient hier der Verhinderung einer unbeabsichtigten Öffnung des Schnappverschlusses. Auf diese Weise ist sichergestellt, dass nach Beendigung der Betätigung der Taste der Verschlussmechanismus des Karabinerelementes wieder vor unbeabsichtigtem Öffnen, beispielsweise durch Leinen, die sich in diesem verwickeln, verhindert wird.

Bei einer einfachen Ausgestaltung der Erfindung ist das Abdeckelement aus einem elastischen Material, insbesondere einem elastischen Kunststoff, vorzugsweise aus Ethylenvinylacetat (EVA) gefertigt, und bei Betätigung der Taste soweit deformierbar, dass der Schlossriegel von außen zugänglich wird.

Bei einer besonders sinnvollen Ausgestaltung des Abdeckelementes weist dieses ein Grundelement auf, in das ein herkömmliches Karabinerelement eingesetzt werden kann. Dabei kann das Grundelement vorzugsweise in Form einer elastisch deformierbaren Hülse ausgestaltet sein, beispielsweise mit einen Federbalg, so dass es in einfacher Weise bei Betätigung der Bestätigungseinrichtung elastisch deformiert werden kann.

Die Betätigungseinrichtung umfasst ein Betätigungselement beispielsweise in der geometrischen Form einer Taste, so dass die Betätigung des Elementes durch den Nutzer auch ohne Hinschauen ermöglicht wird, da er die Tastenform erfühlen kann. Die Erfindung kann jedoch jegliche Formen von Betätigungselementen umfassen.

Die Betätigungseinrichtung kann vorteilhaft derart ausgebildet ist, dass sie bei Betätigung in eine erste Richtung bewegt werden kann, wodurch der Schlossriegel mit dem Betätigungseinrichtung in Wirkverbindung gebracht wird und/oder eine Sicherungseinrichtung, die das Schloss im verschlossenen Zustand sichert, deaktiviert wird, und zudem durch weitere Betätigung in eine zweite Bewegungsrichtung bewegt werden kann, in Folge derer die Öffnungskraft auf den Schlossriegel aufgebracht wird.

Vorzugsweise wird bei Betätigung der Betätigungseinrichtung in der ersten Richtung zunächst die Sicherungseinrichtung deaktiviert, wodurch der Schlossriegel betätigbar wird, und in einer zweiten Bewegung, z.B. einer Rotationsbewegung in Folge derer z.B. das Betätigungsteil gegenüber dem Grundelement bewegt wird, z.B. verkippt, wobei bei der resultierenden Kippbewegung eine Öffnungskraft auf den Schlossriegel aufgebracht wird.

Auf diese Weise wird sichergestellt, dass für den Nutzer ohne Hinsehen unterschieden werden kann zwischen Freigeben des Verriegelungselementes und Betätigung desselben, was zu einer sicheren und einfachen Betätigung des erfindungsgemäßen Karabinermechanismus führt.

Bei einer besonders bevorzugten Ausführungsform der Erfindung ist das als Sicherungseinrichtung fungierende Abdeckelement derart ausgebildet, dass es bei Betätigung der Betätigungseinrichtung zunächst in einer ersten Richtung elastisch deformiert werden kann, wodurch der Schlossriegel freigegeben wird und zudem durch weitere Betätigung in eine zweite Bewegungsrichtung betätigt werden kann, infolge derer die Öffnungskraft auf den Schlossriegel aufgebracht wird. Beispielsweise kann das Abdeckelement in einem ersten Betätigungsschritt deformiert werden und kann dann durch weitere Betätigung der Taste abschnittsweise in eine zweite Richtung verschoben werden, so dass die Öffnungskraft auf den Schlossriegel aufgebracht wird.

Das Abdeckelement kann ein vorzugsweise elastisch deformierbares Grundelement, bevorzugter Weise in Form einer Hülse umfassen. Es kann ebenfalls einen elastisch deformierbaren Federbalg umfassen, der neben der Materialeigenschaft des entsprechenden Kunststoffs eine größere elastische Deformation des Grundelementes ermöglicht. Die Betätigungseinrichtung kann ferner ein gegenüber dem Grundelement bewegbares Betätigungsteil umfassen, an dem beispielsweise ein Tastenelement ausgebildet sein kann, wobei durch Betätigung des Tastenelementes das Betätigungsteil mit dem Grundelement in Wirkverbindung zur Öffnung des Karabinermechanismus gebracht werden kann.

Wenn das Abdeckelement in einem bevorzugten Ausführungsbeispiel aus einem deformierbaren Kunststoff besteht, hat es sich erwiesen, dass es zur Aufnahme des Karabinerelementes sinnvoll sein kann, wenn ein Stabilisatorelement in das Abdeckelement eingefügt wird. Wie bereits erwähnt, kann es sich bei dem Karabinerelement um einen herkömmlichen aus dem Stand der Technik bekannten Karabiner handeln.

Bei derartigen oder anderen Ausführungsbeispielen kann das Abdeckelement ferner ein Fixierelement umfassen, mittels dessen das Karabinerelement in dem Stabilisatorelement lagestabil fixiert werden kann.

Bei derartigen Ausführungsbeispielen wird es auf diese Weise möglich, eine kostengünstige Karabinervorrichtung gemäß der Erfindung bereitzustellen unter Verwendung herkömmlicher Karabinerelemente.

Das Stabilisatorelement kann so ausgebildet sein, dass es in das Grundelement des Abdeckelementes einfügbar ist, wobei an dem Stabilisatorelement ein Sicherungselement vorgesehen sein kann, vorzugsweise in Form eines Armes oder eines Vorsprungs, das eine lagestabile Positionierung des Stabilisatorelementes innerhalb des Grundelementes ermöglicht. Die Funktion des Armes oder des Vorsprungs kann dabei darin bestehen, dass eine Abstützung des Sicherungselementes die lagestabile Position des Stabilisatorelementes verbessert.

Zur Realisierung des erfindungsgemäßen Ansatzes der Betätigung der Karabinervorrichtung in unterschiedliche Bewegungsrichtungen wie oben beschrieben, ist ein bevorzugtes Ausführungsbeispiel so ausgebildet, dass die Betätigungseinrichtung eine abgerundete Anlagefläche, und ein passend-dimensioniertes, abgerundetes Vorsprungelement umfasst, das in der abgerundeten Anlagefläche zur Anlage kommt, wenn die Betätigungseinrichtung in die erste Bewegungsrichtung betätigt wird.

Dabei kann auch z.B. das Stabilisierungselement die abgerundete Anlagefläche, und das Betätigungsteil ein passend-dimensioniertes, abgerundetes Vorsprungelement umfassen, das in der abgerundeten Anlagefläche zur Anlage kommt, wenn das Abdeckelement in der ersten Bewegungsrichtung der ersten Betätigung deformiert wird.

Derartige Ausführungsbeispiele oder andere Ausführungsbeispiele können dabei so ausgestaltet sein, dass bei Betätigung der Betätigungseinrichtung zunächst der Federbalg des Grundelements deformiert wird, wodurch der Schlossriegel von außen frei zugänglich wird, und in einer zweiten Bewegung in Form einer Rotation das Betätigungsteil gegenüber dem Grundelement verkippt wird, wobei bei der Verkippbewegung eine Öffnungskraft auf den Schlossriegel aufgebracht wird.

Derartige Ausführungsformen sind durch einen konstruktiv einfachen Aufbau und sichere Funktionsweise gekennzeichnet.

Die Erfindung ist jedoch nicht auf eine Karabinervorrichtung mit Karabinerelement beschränkt sondern umfasst, da das Karabinerelement ein herkömmliches separates Bauteil darstellen kann, auch eine Öffnungsvorrichtung für einen Karabiner, die dazu eingerichtet ist, mit einem Karabinerelement lösbar verbunden zu werden, und die eine Betätigungseinrichtung umfasst, die nach der Verbindung mit der Öffnungsvorrichtung mit einem Schlossriegel des Karabinerelements in Wirkverbindung steht und dazu eingerichtet ist, bei Betätigung eine Kraft zur Öffnung des Karabinerelements auf den Schlossriegel zu übertragen.

Die Geometrie eines solchen Öffnungsvorrichtung ist an ein vorgegebenes Karabinerelement soweit angepasst, dass es mit dem Karabinerelement lösbar verbunden werden kann, dergestalt dass eine Wirkverbindung zur Öffnung des Karabinerelementes durch die Verbindung realisiert wird. Beispielweise kann das Karabinerelement mindestens teilweise in die Öffnungsvorrichtung oder in eine mindestens teilweise Ummantelung derselben eingesetzt werden.

Weitere Vorteile und bevorzugte Ausführungsformen der Erfindung werden anhand der Zeichnung ersichtlich, bei der
- **Figur 1**: eine Explosionsdarstellung der einzelnen Komponenten eines Ausführungsbeispiels der erfindungsgemäßen Karabinervorrichtung,
- **Figur 2**: das Ausführungsbeispiel der Figur 1 (ohne Abdeckelement) in zusammengesetztem Zustand in einer Grundstellung bei verschlossenem Karabiner,
- **Figur 3a**: das Ausführungsbeispiel der Figur 2 (ohne Abdeckelement) in einem ersten Betätigungszustand nach Deformation des Abdeckelementes und in (noch) verschlossener Stellung des Karabiners,
- **Figur 3b**: eine Ansicht des Ausführungsbeispiels der Figur 3a mit Abdeckelement und
- **Figur 4**: eine Ansicht des Ausführungsbeispiels der Figuren 2 und 3 in vollständigem Betätigungszustand bei geöffnetem Karabiner zeigen.

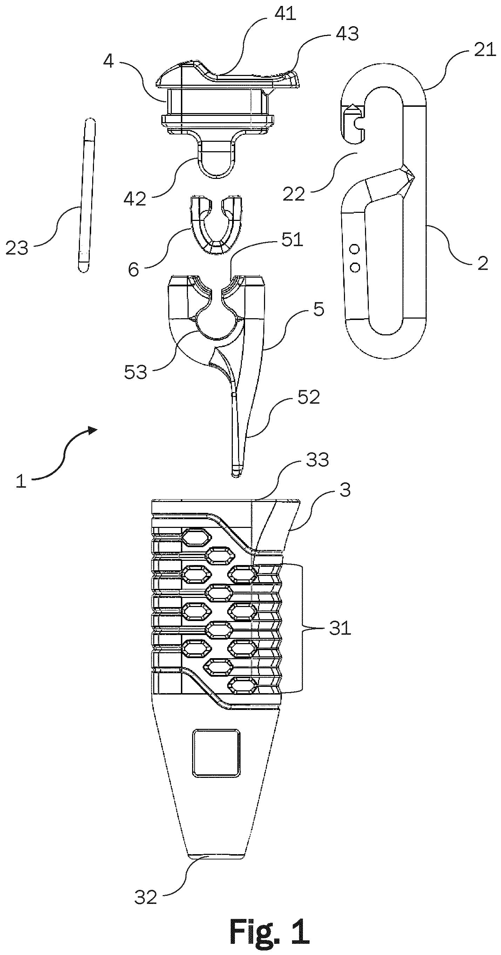

Figur 1 zeigt eine Explosionsdarstellung eines Ausführungsbeispiels der erfindungsgemäßen Karabinervorrichtung, die sämtliche Einzelbestandteile veranschaulicht. Die Karabinervorrichtung 1 umfasst ein Karabinerelement 2 mit einem Karabinerbügel 21, der einen Öffnungsabschnitt 22 aufweist, in den ein Federstahlelement 23 montiert werden kann, der als Riegel für ein entsprechendes Karabinerschloss dient. Das Schloss wird dabei durch den Endabschnitt des Karabinerbügels 21 mit dem innenseitig zur Anlage kommenden entsprechend vorgespannten Federelement 23 gebildet.

Die Karabinervorrichtung umfasst als Sicherung ferner ein Abdeckelement 3, das bei diesem Ausführungsbeispiel aus EVA-Kunststoff gefertigt ist und das in seinem mittleren Abschnitt einen Faltenbalg 31 aufweist, so dass das Abdeckelement in vertikaler Richtung über die elastischen Eigenschaften des Kunststoffs hinaus elastisch deformiert werden kann. Beim Bezugszeichen 3 handelt es sich um das Grundelement eines Abdeckelements. Am unteren Endabschnitt weist das Abdeckelement 3 eine Öffnung32 auf, in die eine nicht dargestellte Sicherheitsleine eingeführt werden kann.

Ein weiterer Bestandteil des Abdeckelementes besteht aus einem Betätigungsteil in Form eines Kopfteils 4, das im oberen Abschnitt des Bildes zu erkennen ist. Dieses weist eine Taste 41 auf, die als Betätigungselement dient mittels derer das Abdeckelement derart verschoben werden kann, dass das Schloss des Karabinerelementes 2 freigegeben wird. Im unteren Abschnitt weist das Kopfteil 4 einen abgerundeten Vorsprung auf, der nach Deformation durch Betätigung der Taste 41 zur Anlage in einer entsprechend abgerundeten Gegenfläche 51 eines Stabilisatorelementes 5 gelangt. Das Stabilisatorelement 5 ist dazu vorgesehen, in das Grundelement 3 des Abdeckelementes eingesetzt zu werden. Das Stabilisatorelement 5 ist dabei aus einem Material mit geringerer Elastizität gefertigt, so dass es als stabiles Gegenlager über die Anlagefläche 51 fungieren kann. Das Stabilisatorelement weist einen Arm 52 auf, der dessen Lageposition innerhalb des Grundelementes 3 des Abdeckelementes 3, 4 verankert.

Beim Zusammensetzen der erfindungsgemäßen Karabinervorrichtung 1 wird das Stabilisatorelement 5 mit seinem oberen Abschnitt auf den unteren Abschnitt des Karabinerelementes 2 aufgeschoben. Durch ein Fixierelement 6, das in einen Abschnitt 53 des Stabilisatorelementes über einen Clip-Mechanismus eingesetzt wird, wird das Stabilisatorelement 5 verlässlich mit dem Karabinerelement 2 lagefest verbunden. Die drei vormontierten Komponenten Karabinerelement 2 mit Stabilisatorelement 5 und Fixierelement 6 werden in das Grundelement 3 der Abdeckvorrichtung eingefügt. Der Arm 52 des Stabilisatorelementes 5 sichert dabei den Gesamtmechanismus gegen Verdrehen, indem er sich gegen eine Ummantelung der von unten über die Öffnung 32 eingefügten (nicht dargestellten) Sicherheitsleine "abstützt".

Im nicht-deformierten Zustand des Grundelementes 3 wird dessen Öffnung 33 nach oben hin durch das Kopfteil 4 verschlossen, wobei eine untere Auflagefläche 43 des Kopfteils 4 auf dem oberen Rand des Grundelementes 3 zur Anlage kommt.

Bei dem vorliegenden Ausführungsbeispiel besteht das Abdeckelement aus zwei Komponenten, dem Grundelement 3 und dem Kopfteil 4, wodurch eine einfache Demontage der Komponenten der erfindungsgemäßen Karabinervorrichtung 1 ermöglicht wird. Ebenso ist es jedoch möglich, dass bei alternativen Ausführungsbeispielen die Sicherungseinrichtung, hier das Abdeckelement, einstückig als einzelnes Bauteil ausgestaltet ist.

Bei alternativen Ausführungsbeispielen kann zudem das Abdeckelement ohne Federbalg ausgestaltet sein und das Karabinerelement 2 kann gegebenenfalls ohne Stabilisatorelement 5 in dem Abdeckelement angeordnet sein. Zudem ist bei dem vorliegenden Ausführungsbeispiel das Abdeckelement als den Karabiner vollständig umschließende Hülse ausgebildet, jedoch ist ebenso jede andere geometrische Ausgestaltung möglich, die beispielsweise nur den Teilabschnitt des Karabinerelementes 2 überdeckt, der das Schloss darstellt, um diesen Abschnitt vor unbeabsichtigtem Öffnen zu sichern.

Die in den Figuren gezeigte Anordnung ohne das Karabinerelement 2 stellt somit eine Öffnungseinrichtung im Sinne der Erfindung dar, in die das Karabinerelement eingefügt werden kann, in dem es in das Grundelement 3 eingesetzt wird.

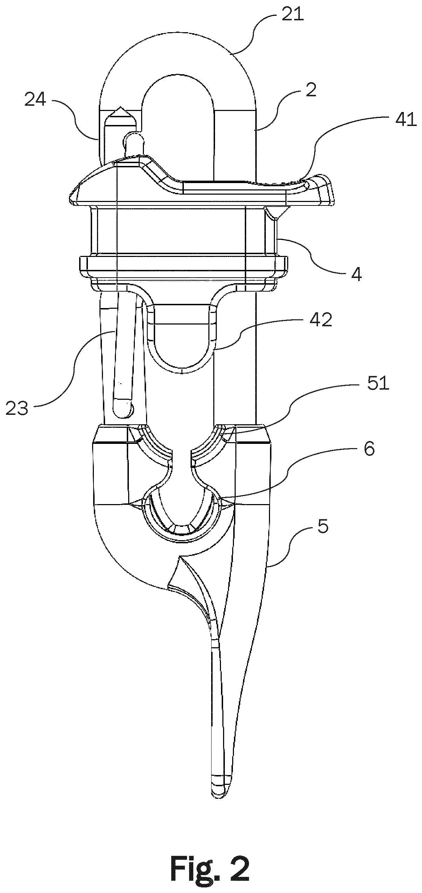

Figur 2 zeigt das in Figur 1 in Explosionsdarstellung veranschaulichte Ausführungsbeispiel einer erfindungsgemäßen Karabinervorrichtung im zusammengesetzten Zustand in einer Seitenansicht, wobei zur Veranschaulichung des Aufbaus das Grundelement 3 des Abdeckelementes nicht dargestellt ist. Identische Bezugszeichen bezeichnen dabei identische Teile der Darstellung der Figur 1. Durch Montage des Federstahlelementes 23 als Schlossriegel an dem Karabinerelement 2 wird dessen Öffnung 22 verschlossen, so dass ein Schloss 24 gebildet wird, das in der Figur 2 im geschlossenen Zustand veranschaulicht ist. Wie aus der Figur 2 ersichtlich, wird das Schloss 24, bzw. der zugehörige Federstahl 23 als Schlossregel durch das Kopfteil 4 des Abdeckelementes abgedeckt. Im Ergebnis ist das Schloss 24 im nicht-deformierten Zustand des Abdeckelementes nicht von außen zugänglich.

Bei dem in der vorliegenden Beschreibung gezeigten Ausführungsbeispiel erfolgt dieses Verschieben des Abdeckelementes durch eine elastische Deformation desselben, es ist jedoch grundsätzlich auch möglich einen anderen Verschiebemechanismus zur Freigabe des Schließmechanismus vorzusehen. Die elastische Deformation bietet den Vorteil, dass eine Art Rückstellelement gebildet wird, bei dem insbesondere das Grundteil 3 als Rückstellelement fungiert, so dass bei Nicht-Betätigung der Taste 41 das Schloss automatisch geschlossen wird und der Gesamtmechanismus nach Betätigung der Betätigungstaste 41 wieder in die Ausgangsstellung automatisch gebracht wird.

Wie ferner aus der Figur 2 ersichtlich ist, liegt die Fläche 42 im geschlossenen Zustand des Schlosses und nicht verschobener Abdeckvorrichtung nicht in ihrer Gegenfläche 51 auf. Demzufolge ist das gezeigte Ausführungsbeispiel derart ausgestaltet, dass zur Freigabe des Schlosses 4 in einer ersten Betätigungsrichtung das Kopfteil 4 durch Betätigung der Betätigungstaste 41 zunächst nach unten geschoben werden muss, bis die Fläche 42 in Anlage mit der Fläche 51 des Stabilisatorelementes 5 gelangt.

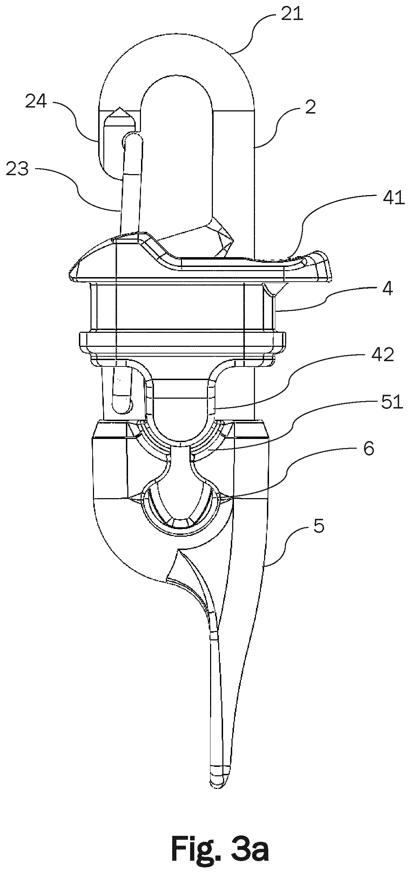

Diese Position ist in der Figur 3a veranschaulicht. Hier liegt die Fläche 42 der Verrundung des Unterteils des Kopfteils 4 des Abdeckelements in ihrer entsprechenden Gegenfläche 51 des Stabilisatorelementes 5 auf. Mit anderen Worten ist in dem in Figur 3a gezeigten Zustand das Kopfteil 4 schon um einen gewissen Betrag nach unten verschoben worden, so dass der Schlossriegel in Form des Federstahlelementes 23 von außen zugänglich wird.

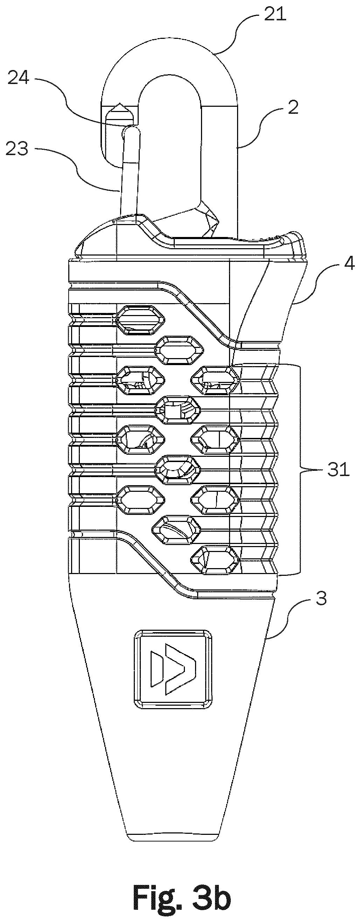

In Figur 3b ist das betreffende Ausführungsbeispiel der Figur 3a in seitlicher Ansicht mitsamt dem Grundelement 3 des Abdeckelementes gezeigt. In der Darstellung ist entsprechend der in diesem Zustand zu einem gewissen Grad zusammengeschobene Federbalgabschnitt 31 zu erkennen.

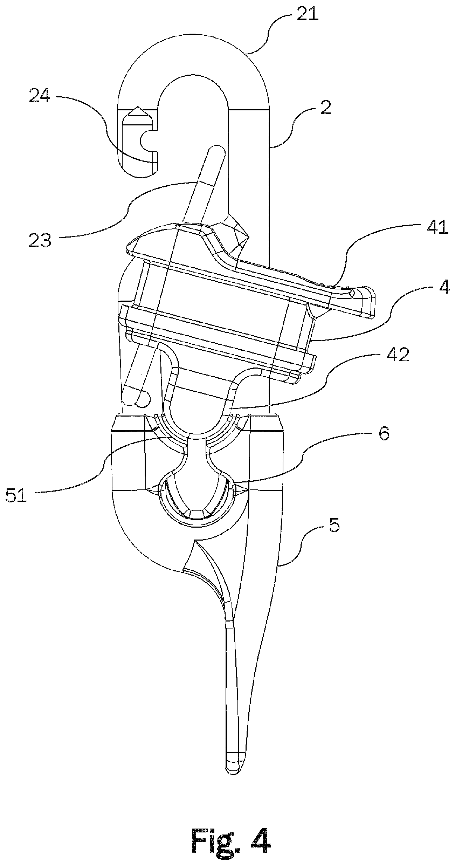

In Figur 4 ist das in den anderen Figuren veranschaulichte Ausführungsbeispiel schließlich im vollständigen Öffnungszustand gezeigt. In dieser Darstellung ist zur Veranschaulichung der einzelnen Komponenten das Grundelement 3 des Abdeckelementes wiederum nicht gezeigt. Dabei wurde das Kopfteil 4 gegenüber der in der Figur 3a gezeigten Stellung durch Betätigung der Betätigungstaste 41 verkippt, wobei die Rundfläche 42 des Kopfteils 4 sich in der Gegenfläche 51 des Stabilisatorelementes 5 abrollt. Infolge der resultierenden Rotation wird der Federstahl 23 mitsamt dem Kopfteil 4 seitlich verkippt, wodurch das Schloss 24 geöffnet wird.

Wie insbesondere aus der Darstellung der Figur 4 gut erkennbar wird, ist bei dem vorliegenden Ausführungsbeispiel die Betätigungstaste 41 seitlich auf der dem Schloss 24 gegenüberliegenden Seite angeordnet. Auf diese Weise kann eine sichere Öffnung des Schlosses 24 gewährleistet werden. Da die Betätigungseinrichtung 41 zudem in Anlage an dem geraden Abschnitt des Karabinerbügels 21 anliegt, ist es für den Nutzer möglich, diese in einfacher Weise "zu ertasten".

Bei dem vorliegenden Ausführungsbeispiel ist aufgrund der elastischen Deformation des Grundelementes 3 in Kippstellung zudem eine Rückstellkraft verursacht, die dafür Sorge trägt, dass bei Loslassen der Betätigungseinrichtung 41 das Schloss 24 neben der Rückstellkraft des Federstahls 23 auch durch die Rückstellkraft des Grundelementes 3 der Abdeckvorrichtung wieder in die Ausgangsstellung eines geschlossenen Karabinerelementes 2 gelangt.

Die Erfindung stellt eine verbesserte Karabinervorrichtung mit Sicherungsfunktion gegen unbeabsichtigtes Öffnen bereit, die über eine Betätigungseinrichtung verfügt, mittels derer der Schlossmechanismus des Karabiners betätigt werden kann, ohne den Schlossriegel selbst mit den Fingern betätigen zu müssen. Bei einer besonders bevorzugten Ausführungsform interagiert die Betätigungseinrichtung mit einer Sicherungseinrichtung, die den Schlossriegel im geschlossenen Zustand derart sichert, dass das Schloss von außen nicht betätigt werden kann, dergestalt, dass bei Betätigung der Betätigungseinrichtung zunächst die Sicherungseinrichtung deaktiviert wird, bevor durch weitere Betätigung das Schloss des Karabinerelementes geöffnet wird.

Darüber hinaus stellt die Erfindung eine Öffnungsvorrichtung mit entsprechender Betätigungsfunktion bereit, die für herkömmliche Karabinerelemente verwendet werden kann, nachdem die Öffnungsvorrichtung mit einem passenden Karabinerelement entsprechend zur Realisierung der Öffnungsfunktion verbunden wurde.

Exemplarische Ausführungsbeispiele sind zudem in den angeschlossenen Patentansprüchen angegeben.

## Patentansprüche

1. Karabinervorrichtung (1) umfassend ein Karabinerelement (2) mit Karabinerbügel (21) und einem Schloss (24) mit gegenüber dem Karabinerbügel beweglichen Schlossriegel (23), durch dessen Betätigung der Karabiner geöffnet wird, und eine Sicherheitseinrichtung, die dazu eingerichtet ist, eine unbeabsichtigte Öffnung des Karabinerelements (2) durch Betätigung des Schlossriegels zu verhindern,
**gekennzeichnet durch** eine Betätigungseinrichtung die mit dem Schlossriegel (23) in Wirkverbindung steht und bei Betätigung eine Kraft zur Öffnung des Karabiners auf den Schlossriegel (23) überträgt;
wobei die Sicherungseinrichtung ein Betätigungselement (41) der Betätigungseinrichtung umfasst.

2. Karabinervorrichtung nach Anspruch 1, **dadurch gekennzeichnet, dass** die Sicherungseinrichtung ein Abdeckelement umfasst, das im geschlossenen Zustand des Karabinerelements (2) den Schlossriegel (23) mindestens teilweise überdeckt, und das Betätigungselement (41) umfasst.

3. Karabinervorrichtung nach Anspruch 2, **dadurch gekennzeichnet, dass** das Abdeckelement derart ausgebildet ist, dass bei Betätigung des Betätigungselements (41) die Überdeckung des Schlossriegels (23) so weit verringert wird, dass eine Öse eines Einhängeelements, beispielsweise einer Sicherungsleine, in den Karabiner eingehängt werden kann.
und das Abdeckelement derart ausgebildet ist, dass es nach dem Loslassen des Betätigungselements (41) in seine Ausgangstellung zurückkehrt, in der der Schlossriegel (23) geschlossen und mindestens teilweise überdeckt ist.

4. Karabinervorrichtung nach einem der Ansprüche 2 oder 3, **dadurch gekennzeichnet, dass** das Abdeckelement aus einem elastischen Material, vorzugsweise aus Kunststoff und besonders bevorzugt aus Ethylvinylacetat (EVA) gefertigt ist, und durch Betätigung des Betätigungselements so weit deformierbar ist, dass das geöffnete Schloss des Karabinerelementes (2) von außen zugänglich wird.

5. Karabinervorrichtung nach einem der vorhergehenden Ansprüche, **dadurch gekennzeichnet, dass** die Betätigungseinrichtung derart ausgebildet ist, dass sie bei Betätigung in eine erste Richtung bewegt werden kann, wodurch der Schlossriegel (23) mit der Betätigungseinrichtung in Wirkverbindung gebracht wird und/oder die Sicherungseinrichtung, die dazu eingerichtet ist, eine unbeabsichtigte Öffnung des Karabinerelements (2) durch Betätigung des Schlossriegels zu verhindern, deaktiviert wird, und zudem durch Betätigung in eine zweite Bewegungsrichtung gebracht werden kann, in Folge derer die Öffnungskraft auf den Schlossriegel (23) aufgebracht wird.

6. Karabinervorrichtung nach einem der vorhergehenden Ansprüche, **dadurch gekennzeichnet, dass** die Sicherungseinrichtung ein vorzugsweise elastisch deformierbares Grundelement (3), vorzugsweise in Form einer Hülse oder einer mindestens teilweisen Ummantelung des Karabinerelementes (23), und ein Betätigungsteil (4) umfasst.

7. Karabinervorrichtung nach einem der Ansprüche 2 bis 4, **dadurch gekennzeichnet, dass** das Abdeckelement, vorzugsweise das Grundelement (3) einen elastisch deformierbaren Federbalg (31) umfasst.

8. Karabinervorrichtung nach einem der vorhergehenden Ansprüche, **dadurch gekennzeichnet, dass** die Sicherungseinrichtung ein bewegbares Betätigungsteil (4) umfasst, an dem das Betätigungselement (41) zur Öffnung des Karabiners ausgebildet ist.

9. Karabinervorrichtung nach einem der Ansprüche 2 bis 4 oder 7, **dadurch gekennzeichnet, dass** das Abdeckelement ein Stabilisatorelement (5) umfasst, das zur Aufnahme und lagefesten Stabilisierung des Karabinerelements (23) innerhalb des Abdeckelementes eingerichtet ist.

10. Karabinervorrichtung nach Patentanspruch 9, **dadurch gekennzeichnet, dass** das Stabilisatorelement (5) ein Fixierelement (6) umfasst, mittels dessen das Karabinerelement (23) in dem Stabilisatorelement (5) lagefest fixiert werden kann und/oder das Stabilisatorelement (5) so ausgebildet ist, dass es in das Grundelement (3) des Abdeckelementes einfügbar ist, wobei an dem Stabilisatorelement (5) ein Sicherungselement (51), vorzugsweise in Form eines Armes oder Vorsprungs ausgebildet ist, das eine lagestabile Positionierung des Stabilisatorelementes (5) innerhalb des Grundelementes (3) ermöglicht.

11. Karabinervorrichtung nach einem der vorhergehenden Ansprüche, **dadurch gekennzeichnet, dass** die Betätigungseinrichtung eine abgerundete Anlagefläche (42) umfasst, und ein passend-dimensioniertes, abgerundetes Vorsprungelement umfasst, das in der abgerundeten Anlagefläche zur Anlage kommt, wenn die Betätigungseinrichtung in die erste Bewegungsrichtung betätigt wird.

12. Karabinervorrichtung nach einem der vorhergehenden Ansprüche, **dadurch gekennzeichnet, dass** bei Betätigung der Betätigungseinrichtung zunächst die Sicherungseinrichtung deaktiviert wird, wodurch der Schlossriegel (23) betätigbar wird, und in einer Rotationsbewegung das Betätigungsteil (4) gegenüber dem Grundelement (3) verkippt wird, wobei bei der resultierenden Kippbewegung eine Öffnungskraft auf den Schlossriegel (23) aufgebracht wird.

13. Öffnungsvorrichtung für einen Karabiner, die dazu eingerichtet ist, mit einem Karabinerelement (23) lösbar verbunden zu werden, und die eine Betätigungseinrichtung umfasst, die nach der Verbindung der Öffnungsvorrichtung mit einem Karabinerelement (23) mit einem Schlossriegel (23) des mit der Öffnungsvorrichtung verbundenen Karabinerelements (2) in Wirkverbindung steht und dazu eingerichtet ist, bei Betätigung eine Kraft zur Öffnung des mit der Öffnungsvorrichtung verbundenen Karabinerelements (2) auf dessen Schlossriegel (23) zu übertragen, **dadurch gekennzeichnet, dass** die Öffnungsvorrichtung weiterhin eine Sicherungseinrichtung umfasst, die dazu eingerichtet ist, eine unbeabsichtigte Öffnung des Karabinerelements (23) durch Betätigung des Schlossriegels zu verhindern, wobei die Sicherungseinrichtung ein Betätigungselement (41) der Betätigungseinrichtung umfasst.

14. Öffnungsvorrichtung für einen Karabiner nach Anspruch 13, mit einer Ummantelung, die dazu eingerichtet ist, ein Karabinerelement (2) mindestens teilweise zu ummanteln.

## Claims

1. Carabiner device (1) comprising a carabiner element (2) with a carabiner hoop (21) and a lock (24) with a lock bolt (23) which is movable with respect to the carabiner hoop and by actuation of which the carabiner is opened, and a safety device which is configured to prevent unintentional opening of the carabiner element (2) by actuation of the lock bolt, **characterized by** an actuating device which is operatively connected to the lock bolt (23) and, upon actuation, transmits a force for opening the carabiner to the lock bolt (23); wherein the safety device comprises an actuating element (41) of the actuating device.

2. Carabiner device according to Claim 1, **characterized in that** the safety device comprises a covering element which, in the closed state of the carabiner element (2), at least partially covers the lock bolt (23), and comprises the actuating element (41).

3. Carabiner device according to Claim 2, **characterized in that** the covering element is designed such that, upon actuation of the actuating element (41), the covering of the lock bolt (23) is reduced to such an extent that an eye of a suspension element, for example a safety line, can be suspended in the carabiner. and the covering element is designed such that, after the release of the actuating element (41), it returns to its starting position in which the lock bolt (23) is closed and at least partially covered.

4. Carabiner device according to either of Claims 2 and 3, **characterized in that** the covering element is produced from an elastic material, preferably from plastic and particularly preferably from ethyl vinyl acetate (EVA), and, by actuation of the actuating element, is deformable to such an extent that the opened lock of the carabiner element (2) becomes accessible from the outside.

5. Carabiner device according to one of the preceding claims, **characterized in that** the actuating device is designed such that, upon actuation, it can be moved in a first direction, as a result of which the lock bolt (23) is brought into operative connection with the actuating device, and/or the safety device which is configured to prevent unintentional opening of the carabiner element (2) by actuation of the lock bolt is deactivated, and, in addition, can be brought into a second movement direction by actuation, as a result of which the opening force is applied to the lock bolt (23).

6. Carabiner device according to one of the preceding claims, **characterized in that** the safety device comprises a preferably elastically deformable basic element (3), preferably in the form of a sleeve or an at least partial sheathing of the carabiner element (23), and an actuating part (4).

7. Carabiner device according to one of Claims 2 to 4, **characterized in that** the covering element, preferably the basic element (3), comprises an elastically deformable spring bellows (31).

8. Carabiner device according to one of the preceding claims, **characterized in that** the safety device comprises a movable actuating part (4) on which the actuating element (41) for opening the carabiner is formed.

9. Carabiner device according to one of Claims 2 to 4 or 7, **characterized in that** the covering element comprises a stabilizer element (5) which is configured for receiving and positionally stable stabilization of the carabiner element (23) within the covering element.

10. Carabiner device according to Patent Claim 9, **characterized in that** the stabilizer element (5) comprises a fixing element (6), by means of which the carabiner element (23) can be fixed in a positionally stable manner in the stabilizer element (5), and/or the stabilizer element (5) is designed such that it can be inserted into the basic element (3) of the covering element, wherein a securing element (51), preferably in the form of an arm or projection, is formed on the stabilizer element (5) and permits positionally stable positioning of the stabilizer element (5) within the basic element (3).

11. Carabiner device according to one of the preceding claims, **characterized in that** the actuating device comprises a rounded bearing surface (42), and comprises a suitably dimensioned, rounded projection element which comes to bear in the rounded bearing surface when the actuating device is actuated in the first movement direction.

12. Carabiner device according to one of the preceding claims, **characterized in that**, upon actuation of the actuating device, firstly the safety device is deactivated, as a result of which the lock bolt (23) can be actuated, and, in a rotational movement, the actuating part (4) is tilted with respect to the basic element (3), wherein, in the resulting tilting movement, an opening force is applied to the lock bolt (23).

13. Opening device for a carabiner, which opening device is configured to be releasably connected to a carabiner element (23) and comprises an actuating device which, after the connection of the opening device to a carabiner element (23), is operatively connected to a lock bolt (23) of the carabiner element (2) connected to the opening device and, upon actuation, is configured to transmit a force for opening the carabiner element (2) connected to the opening device to the lock bolt (23) thereof, **characterized in that** the opening device furthermore comprises a safety device which is configured to prevent unintentional opening of the carabiner element (23) by actuation of the lock bolt, wherein the safety device comprises an actuating element (41) of the actuating device.

14. Opening device for a carabiner according to Claim 13, with a sheathing which is configured to at least partially sheath a carabiner element (2).

## Revendications

1. Dispositif de mousqueton (1) comprenant un élément de mousqueton (2) avec un étrier de mousqueton (21) et une serrure (24) avec un pêne de serrure (23) mobile par rapport à l'étrier de mousqueton, par l'actionnement duquel le mousqueton est ouvert, et un dispositif de sécurité qui est conçu pour empêcher une ouverture involontaire de l'élément de mousqueton (2) par actionnement du pêne de serrure, **caractérisé par** un dispositif d'actionnement qui est en liaison fonctionnelle avec le pêne de serrure (23) et qui, lors de l'actionnement, transmet une force pour l'ouverture du mousqueton au pêne de serrure (23) ; le dispositif de sécurité comprenant un élément d'actionnement (41) du dispositif d'actionnement.

2. Dispositif de mousqueton selon la revendication 1, **caractérisé en ce que** le dispositif de sécurité comprend un élément de recouvrement qui, dans l'état fermé de l'élément de mousqueton (2), recouvre au moins partiellement le pêne de serrure (23), et comprend l'élément d'actionnement (41).

3. Dispositif de mousqueton selon la revendication 2, **caractérisé en ce que** l'élément de recouvrement est réalisé de telle sorte que, lors de l'actionnement de l'élément d'actionnement (41), le recouvrement du pêne de serrure (23) soit réduit suffisamment pour qu'un oeillet d'un élément d'accrochage, par exemple une corde de sécurité, puisse être accroché dans le mousqueton.
et l'élément de recouvrement est réalisé de telle sorte qu'il retourne, après le relâchement de l'élément d'actionnement (41), dans sa position initiale dans laquelle le pêne de serrure (23) est fermé et au moins partiellement recouvert.

4. Dispositif de mousqueton selon l'une quelconque des revendications 2 ou 3, **caractérisé en ce que** l'élément de recouvrement est fabriqué en un matériau élastique, de préférence en plastique et de manière particulièrement préférée en acétate de vinyle-éthyle (EVA), et peut être déformé par actionnement de l'élément d'actionnement suffisamment pour que la serrure ouverte de l'élément de mousqueton (2) soit accessible de l'extérieur.

5. Dispositif de mousqueton selon l'une quelconque des revendications précédentes, **caractérisé en ce que** le dispositif d'actionnement est réalisé de telle sorte qu'il puisse être déplacé lors de l'actionnement dans une première direction, moyennant quoi le pêne de serrure (23) est amené en liaison fonctionnelle avec le dispositif d'actionnement et/ou le dispositif de sécurité, qui est conçu pour empêcher une ouverture involontaire de l'élément de mousqueton (2) par actionnement du pêne de serrure, est désactivé, et peut en outre être amené par actionnement dans une deuxième direction de déplacement, à la suite de laquelle la force d'ouverture est appliquée sur le pêne de serrure (23).

6. Dispositif de mousqueton selon l'une quelconque des revendications précédentes, **caractérisé en ce que** le dispositif de sécurité comprend un élément de base (3) de préférence élastiquement déformable, de préférence sous la forme d'une douille ou d'une enveloppe au moins partielle de l'élément de mousqueton (23), et une partie d'actionnement (4).

7. Dispositif de mousqueton selon l'une quelconque des revendications 2 à 4, **caractérisé en ce que** l'élément de recouvrement, de préférence l'élément de base (3), comprend un soufflet à ressort (31) élastiquement déformable.

8. Dispositif de mousqueton selon l'une quelconque des revendications précédentes, **caractérisé en ce que** le dispositif de sécurité comprend une partie d'actionnement (4) mobile sur laquelle est réalisé l'élément d'actionnement (41) pour l'ouverture du mousqueton.

9. Dispositif de mousqueton selon l'une quelconque des revendications 2 à 4 ou 7, **caractérisé en ce que** l'élément de recouvrement comprend un élément stabilisateur (5) qui est conçu pour recevoir et stabiliser de manière fixe en position l'élément de mousqueton (23) à l'intérieur de l'élément de recouvrement.

10. Dispositif de mousqueton selon la revendication 9, **caractérisé en ce que** l'élément stabilisateur (5) comprend un élément de fixation (6) au moyen duquel l'élément de mousqueton (23) peut être fixé de manière fixe en position dans l'élément stabilisateur (5) et/ou l'élément stabilisateur (5) est réalisé de telle sorte qu'il puisse être inséré dans l'élément de base (3) de l'élément de recouvrement, un élément de sécurité (51), de préférence sous la forme d'un bras ou d'une saillie, étant réalisé sur l'élément stabilisateur (5), lequel permet un positionnement stable en position de l'élément stabilisateur (5) à l'intérieur de l'élément de base (3).

11. Dispositif de mousqueton selon l'une quelconque des revendications précédentes, **caractérisé en ce que** le dispositif d'actionnement comprend une surface d'appui arrondie (42), et comprend un élément de saillie arrondi dimensionné de manière adaptée, qui vient en appui dans la surface d'appui arrondie lorsque le dispositif d'actionnement est actionné dans la première direction de déplacement.

12. Dispositif de mousqueton selon l'une quelconque des revendications précédentes, **caractérisé en ce que** lors de l'actionnement du dispositif d'actionnement, d'abord le dispositif de sécurité est désactivé, moyennant quoi le pêne de serrure (23) peut être actionné, et dans un mouvement de rotation, la partie d'actionnement (4) est basculée par rapport à l'élément de base (3), une force d'ouverture étant appliquée sur le pêne de serrure (23) lors du mouvement de basculement résultant.

13. Dispositif d'ouverture pour un mousqueton, qui est conçu pour être connecté de manière amovible à un élément de mousqueton (23), et qui comprend un dispositif d'actionnement qui, après la connexion du dispositif d'ouverture à un élément de mousqueton (23), est en liaison fonctionnelle avec un pêne de serrure (23) de l'élément de mousqueton (2) connecté au dispositif d'ouverture et qui est conçu pour, lors de l'actionnement, transmettre une force pour l'ouverture de l'élément de mousqueton (2) connecté au dispositif d'ouverture à son pêne de serrure (23), **caractérisé en ce que** le dispositif d'ouverture comprend en outre un dispositif de sécurité qui est conçu pour empêcher une ouverture involontaire de l'élément de mousqueton (23) par actionnement du pêne de serrure, le dispositif de sécurité comprenant un élément d'actionnement (41) du dispositif d'actionnement.

14. Dispositif d'ouverture pour un mousqueton selon la revendication 13, comprenant une enveloppe qui est conçue pour envelopper au moins partiellement un élément de mousqueton (2).
